# EUROPEAN PATENT APPLICATION

(11) **EP 4 491 062 A1**
(43) Date of publication of application: **15.01.2025**
(21) Application number: 23765622.8
(22) Date of filing: 10.03.2023
(51) Int. Cl.: A45D 44/00, B25J 9/16

(54) **DEVICE AND METHOD FOR AUTOMATICALLY APPLYING A COSMETIC PRODUCT TO A USER**

(30) Priority: 11.03.2022 BR 102022004560
(71) Applicant: Botica Comercial Farmacêutica Ltda, 83055-900 São José dos Pinhais (BR)
(72) Inventor: OLIVEIRA REIS, Arthur, Recife (BR); SCLIAR SASSON, Clarice, Curitiba (BR); SILVA NETO, Eronides Felisberto da, Recife (BR); SIPKOI KELLERMANN, Gábor, Recife (BR); CAMPOS DIEAMANT, Gustavo de, Curitiba (BR); CAVALCANTI PINTO JARDIM, Izabella, Recife (BR); CARVALHO FRANÇA, Jayne, Quixadá (BR); MARCHIORO, Lucas Vinícius, São José dos Pinhais (BR); MARQUES DA LUZ, Luigi Fernando, Moreno (BR); SCHWAMBACH COSTA, Luís Mario, Graças Recife (BR); ALMEIDA NETO, Manoel Alves de, Canasvieiras Florianópolis (BR); NORO VILLAS BOAS, Mateus, Curitiba (BR); HARAGUCHI PADILHA, Milene, Curitiba (BR); DREYER LEUCHTENBERG, Pedro Henrique, Recife (BR); BUARQUE ASSUNÇÃO DE CARVALHO, Tiago, Garanhuns (BR); CÂMARA BOCKHOLT, Tiago, Recife (BR); BARROS CABRAL, Victor Hugo de, Recife (BR)
(74) Representative: Winter, Brandl - Partnerschaft mbB
(86) International application number: PCT/BR2023/050084
(87) International publication number: WO 2023/168507

(57) **Abstract**

The present patent of invention pertains to the technical field of methods or devices for reading and identifying patterns viewing the preparation and application of cosmetics. More specifically, it presents a device and method of automatically applying a cosmetic product on a user, comprised by a portable device for the automatic application of cosmetic products (1) comprising a casing (4) and a base support (5) for receiving and encapsulating a movement mechanism (3) by Computerized Numerical Command - CNC through a list of movements based on pre-programmed sequential commands in G-code.

## Description

The present patent of invention pertains to the technical field of methods or devices for reading and identifying patterns viewing the preparation and application of cosmetics. More specifically, it presents a device and method of automatically applying a cosmetic product on a user, comprised by a portable device with camera coupled for recognizing the lip and generating the G-code (computer language responsible for commanding movements of a machine) for describing a path and driving a Computerized Numerical Command - CNC for controlling the movement of a cosmetic product movement mechanism, such as a lipstick, on a user.

### STATE OF THE ART

Representing a long sought-after need in the state of the art, various appliances and methods for automatically applying cosmetics on users are disclosed in patent documents, for example, as seen in publications PI1107004-8; US10479109; CN103885461, US9811717 and EP3384802B1.

The patent document EP3384802B1 further provides for the use of processing by Computerized Numerical Command - CNC for controlling the movement of an automatic make-up mechanism, by driving movement actuators in directions X, Y and Z. Further, the patent document WO13040865 also demonstrates the use of a CNC mechanism for movement on axes, supported on a main structure body.

Regarding the utilization of the Code G technique for interpreting, controlling, driving step motors viewing the directioning of an applicator, in this particular case 3D printing, is presented by document CN113071097.

In particular, the patent document BR102020022162-0 entitled "Method of Detecting and Segmenting the Lip Region", owned by the same applicant as the present invention, already provides for the use of deep learning algorithms, machine learning and artificial intelligence for detecting and segmenting the lip region in a precise manner, to enable the automatic application of lip products.

### TECHNICAL PROBLEM

Although the state of the art provides for the existence of various appliances and methods for automatically applying cosmetics on users, or mechanisms acting by CNC, or even the use of Code G techniques already known in 3D printing for driving/moving step motors, said documents fail to present a device whose arrangement of the movement mechanism and camera arrangement enable the greater compacting and portability thereof.

Moreover, the state of the art is also in need of a unique solution that associates said compacting and portability of the device with desirable characteristics of greater speed and precision in obtaining and processing images, generating G Codes and driving the mechanisms by CNC, for example, as seen in the equipment of patent document EP3384802B1 which besides requiring a complex arrangement on a bench, does not mention the use of essential G Codes for a better recognition and specific segmentation with firm assertiveness of the region of the lips and for conceiving greater speed and precision in the movement of the mechanisms for applying cosmetics to the user.

### TECHNICAL SOLUTION

The present invention presents various solutions to the problems found in the state of the art, providing a compact and portable device for automatically applying a cosmetic product, such as a lipstick, on a user, with a fast, practical and effective result, essentially by means of a camera coupled for recognizing the user image, for example a lip of a user, generating a Code G file for describing a path and driving a Computerized Numerical Command - CNC that controls a movement mechanism for automatic application of a cosmetic product, such as a lipstick, of a user.

Moreover, the present invention also provides, in addition to the use of algorithms for detecting and segmenting the lip region taught in document BR102020022162-0, a post-processing approach of the segmentation of an image, for example of the lips of a person, with the aim of assisting in mapping the movement path through the Code G and passing this information on to the precise movement process by CNC for automatically applying a cosmetic product, such as lipstick, on a user.

### BRIEF DESCRIPTION OF DRAWINGS

The description that follows is not limited to the drawings or components cited, having as reference the following illustrations referenced below.
Figure 1A presents a portable device for the automatic application of cosmetic products on a user according to the present invention.
Figure 1B presents a casing for encapsulating the electromechanical movement device.
Figure 1C presents an electromechanical movement device fastened to a base support.
Figure 2A presents a simplified block digram referring to the steps of recognizing the image of the user by the camera coupled to the portable device for the automatic application of cosmetic products, generation of the Code G file and drive of the electromechanical movement device by CNC.
Figure 2B presents a block diagram of the electronic drive components and control of the automatic application of a cosmetic product on a user.
Figure 2C presents a block diagram of the complete architecture of the system of electronic drive components and control of the automatic application of a cosmetic product on a user.
Figure 2D presents a flowchart of how the modules of the system that are used in a reduced size computer component on a single board, such as a Raspberry Pi board are organized.
Figure 3 presents a diagram of the various states of the portable device for the automatic application of cosmetic products on a user.
Figure 4A presents a schematic diagram of the various electronic and electromechanical drive and control components present in the portable device for automatically applying cosmetic products on a user.
Figures 4B and 4C illustrate examples of electronic components present in the portable device for the automatic application of cosmetic products on a user.
Figures 5A to 5D present assembly details of an X-axis movement module of the electromechanical movement device.
Figures 6A to 6E present assembly details of a Y-axis movement module of the electromechanical movement device.
Figures 7A to 7F present assembly details of a Z-axis movement module of the electromechanical movement device.
Figures 8A to 8E present integration assembly details between X-axis movement module, Y-axis movement module and Z-axis movement module.
Figures 9A and 9B present details of camera positioning on the X-axis movement module.
Figures 10A and 10B present details of positioning of the electronic circuit board component and of the reduced size computer component on a single board on the X-axis movement module.
Figures 11A and 11B present top and bottom perspective views of the portable device for automatically applying a cosmetic product in an essential embodiment of the invention.
Figures 12A and 12B present top and bottom perspective views of the portable device for the automatic application of cosmetic products in a second embodiment of the invention.
Figures 13A and 13B present top and bottom perspective views of the portable device for the automatic application of cosmetic products in a third embodiment of the invention.
Figures 14A and 14B present details of fastening of the movement mechanism by CNC to the base support.
Figures 15A and 15B present details of fastening of the base support to the mannequin head support component in one of the embodiments.
Figures 16A to 16C present details of the casing of the portable device for the automatic application of cosmetic products.
Figure 17 presents a simplified diagram of the utilization of the computer vision model.
Figures 18A to 18H present images resulting from the various steps of the process of segmenting the lip image used in the method of automatically applying a cosmetic product of the present invention.

### DETAILED DESCRIPTION

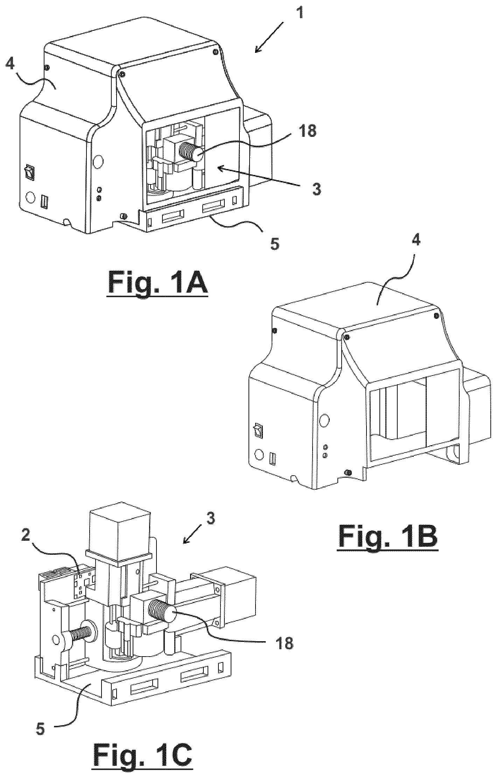

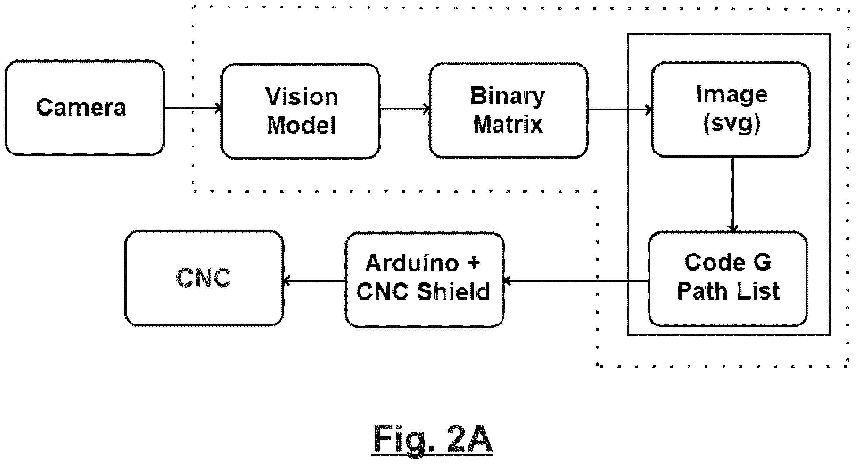

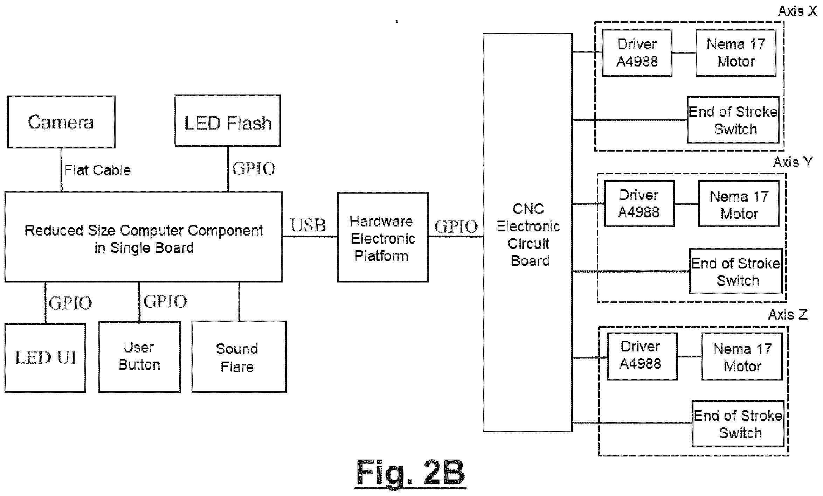

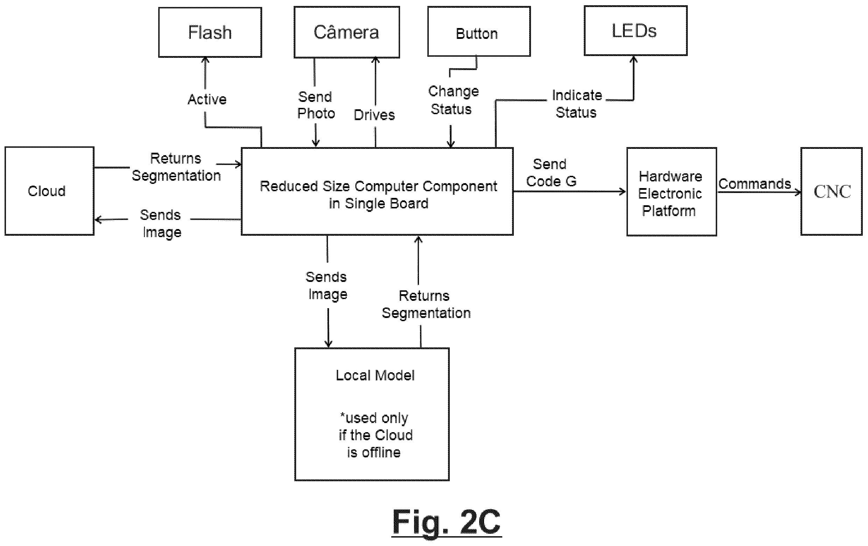

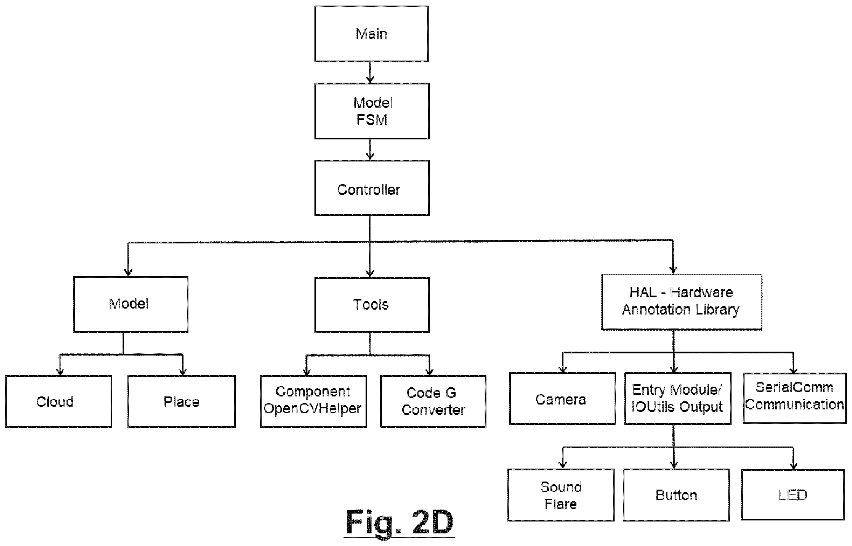

The present invention presents a portable device for the automatic application of cosmetic products (1) on a user, as exemplified in Figures 1 and 2 in an essential embodiment of the invention, comprising a camera (2) coupled for capturing the user's image, for example a lip of a user, for generating a Code G file to describe the path and drive of the Computerized Numerical Command - CNC for controlling a movement mechanism (3) by CNC for the automatic application of cosmetic product on a user, such as lipstick. The portable device for the automatic application of cosmetic products (1) on a user further comprises a casing (4) and a base support (5) for receiving and encapsulating said movement mechanism (3) by CNC and other electronic drive components and controlling the automatic application of a cosmetic product on a user.

A simplified block diagram is presented in figure 2A, referring to the steps of recognizing an image of the user by the camera coupled to the portable device for the automatic application of cosmetic products, generation of the Code G file for driving the CNC and controlling the movement mechanism of automatic application of a cosmetic product on a user.

In particular, the Code G file encodes all the movements of a mechanical movement device (3) by CNC during the process of applying a cosmetic, such as lipstick, to the user, and due to the great precision required upon carrying out the the application of the cosmetic and so as to guarantee improved quality, a Code G file is generated by means of a process of mapping the segment of the image captured by the camera and adjusting and defining values of the X, Y and Z axes.

More specifically, Figure 2B presents a block diagram of the electronic drive and control components of the automatic application of the cosmetic product on a user according to the present invention, including reduced size computer component in single board, such as a Raspberry Pi 4 board, electronic hardware platform, such as an Arduino MEGA board, and its peripheral correspondents, such as LEDs, buttons and buzzer.

The complete architecture of the system of electronic drive components and control of the automatic application of a cosmetic product on a user according to the present invention is depicted in figure 2C. As can be noted in figure 2C, a system runs within the Raspberry Pi and performs the management of the hardware components: LEDs which act as feedbacks of the system, for example, turning the device on and off for the automatic application of cosmetic products on a user; buzzer that is a sound drive used in combination with the LEDs to create the feedbacks of the system; Flash, in this case, is a LED acting as a flash to assist the image capture process; lastly, and the camera in the Raspberry Pi which is used to capture photos of the lips and create the process of lip segmentation through, for example, a model for detecting an image in an efficient manner with generation of a high quality segmentation mask, such as through a CNN Mask-R model. Additionally, the system may also make use of the CNN Mask-R in two ways, via an external programming interface, or carrying the local model (inside the Raspberry Pi) when the programming interface is not available for use. Lastly, the architecture gives access to the Arduino board in which it makes the drive of the CNC, that is, the mechanical movement device which in fact makes the application of the cosmetic product, such as lipstick.

The flowchart illustrated in figure 2D demonstrates how the modules of the system used in the Raspberry Pi are organized.

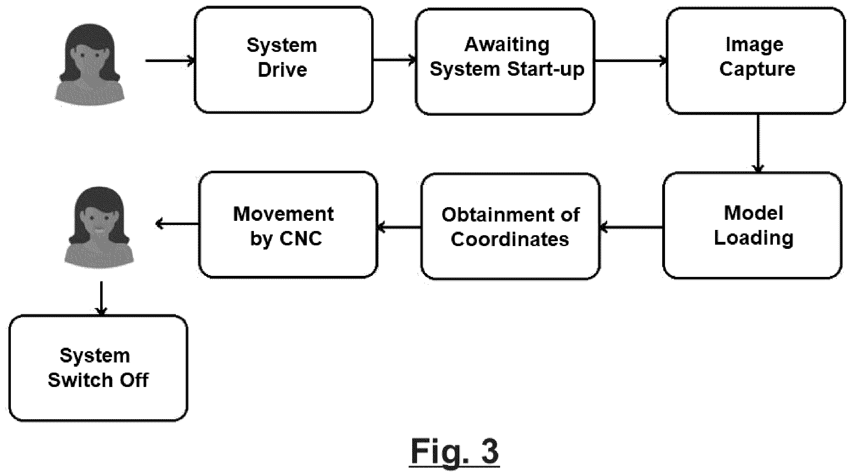

Various states of the portable device for the automatic application of cosmetic products according to the present invention may be indicated during the course of its execution method, as exemplified in the diagram of states presented in figure 3 wherein, initially, the on-button is switched, then the system starts up, the user activates the button to obtain an image of the lip, once the image is obtained, the computer vision model segments the lip, after segmentation the system sends the coordinates based on the segmentation and drives the CNC and the mechanical movement device, and at the end of the movement and of the pigmentation of the lip, the system can be turned off, switching the button. Obviously, although the present invention uses drives by buttons, other drive modes can be understood and used by a person skilled in the art without straying from the scope of the invention, for example, automatic and timed drives, among others.

In a non-limitative manner, various specific indicators of operating status of the portable device for the automatic application of cosmetic products according to the present invention can be determined for perception by the user, for example, pursuant to Table 1.

| Table 1 | |
|---|---|
| Status | Indicator |
| System initiated | One short sound flare and LED flashing |
| Ready to initiate a cycle | Two short sound flares and LED lit up |
| Image captured | One short sound flare and LED flashes (simulated flash) |
| Image being processed | Cycles of three short sound flares until the start of the pigmentation and LED slowly flashing |
| CNC driven with mechanical movement device | Working of the motors and LED slowly flashing |
| Pigmentation concluded | Two short sound flares and LED lit up |
| System turned off | LED switched off |
| Error | Sequence of long sound flares and LED quickly flashing |

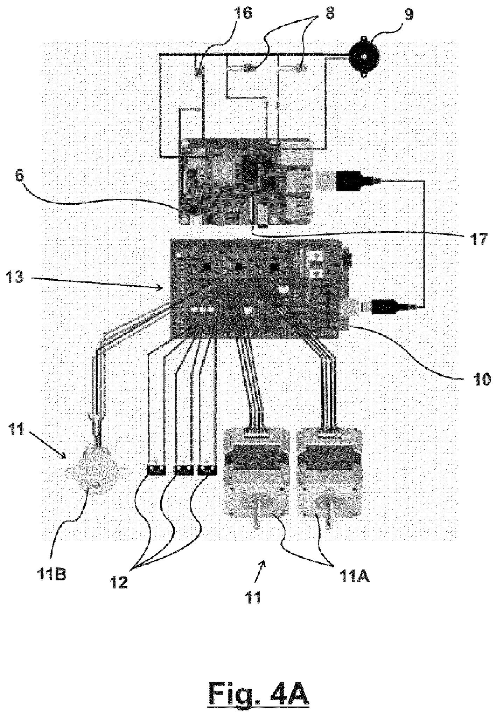

As seen in figure 4A, a schematic diagram is presented of the various electronic and electromechanical drive and control components of the automatic application of a cosmetic product on a user present in the portable device according to the present invention as detailed ahead.

According to the present invention, between the electronic drive components and controle of the automatic application of a cosmetic product on a user, the reduced size computer component on a single board (6), such as a Raspberry Pi 4 board, is the central component of the system. The reduced size computer component on a single board (6) has the main function of managing the other components of the system, so as to guarantee that they operate in accordance with the working routine of the system and method of automatically applying a cosmetic product on a user. During operation, some of the functions it carries out are:
- send an electric drive signal to an instant brightness generation component (7) (for example, a LED Flash);
- create the image capture;
- access the programming interface of the cloud to create an inference;
- send electric drive signals to the interface components with the user, such as the light signalling components (8) (LEDs) and buzzer (9); and
- send movement commands to the hardware electronic platform (10), such as an Arduino MEGA board.

For the working of this reduced size computer component on a single board (6) it is necessary to use a power source, for example 5V/3A with USB type C connector, however, in a non-restrictive manner, it is possible to use independent power sources, for example, rechargeable batteries.

In turn, the function of the hardware electronic platform (10), such as Arduino MEGA board, is to control the sensors and actuators that are related to the drive of the CNC and mechanical movement device (3), making the step motors (11) be driven for three axes (X, Y and Z) in accordance with end of stroke switches (12). For said control, drive and movement of said mechanical movement device (3), an embedded computer logic is used, such as a firmware Marlin, broadly used for controlling CNCs.

The portable device for the automatic application of cosmetic products (1) on a user further comprises, between its electronic drive and control, electronic circuit board (13), for example Shield RAMPS, with auxiliary connections to create the electronic interfaces necessary for connection between a hardware electronic platform (10) (for example, Arduino MEGA) and the electronic components contained in the mechanical movement device (3) by CNC, such as actuation drivers, step motors (11) and end of stroke switches (12).

A driver (15) (for example A4988) appears as another component in said portable device for the automatic application of cosmetic products (1) on a user, so as to carry out the electronic interface between the electronic circuit board (13), for example Shield RAMPS, and the step motors (11) used for movement of the mechanical movement device (3) by CNC. The main function of the driver (15) is to condition the electric signals originating from the hardware electronic platform (10), such as the Arduino MEGA board, so that they can be used to control the movement of the step motors (11).

Said step motors (11) are used to move a mechanical movement device (3) by CNC along three axes of freedom of the system. To create a movement on the X and Y axes, two step motors (11A), for example, of the type NEMA-17 can be used, one for each axis. For movement on the Z-axis, a step motor (11B) of the type 28BYJ-48, for example, can be used.

Further, end of stroke switches (12) also are used on the portable device for the automatic application of cosmetic products (1) on a user, having the objective of providing a positioning reference for the mechanical movement device (3) by CNC, such that 3 end of stroke switches are used, each one is positioned at the origin of the Cartesian axes (X, Y and Z) of said mechanical movement device (3) by CNC.

In dealing with components indicating the operating status of the portable device for the automatic application of cosmetic products (1) to the user, it comprises a buzzer (9) providing a sound indication to the user while the system is running.

In complement to the buzzer (9), viewing greater accessibility to the user, including the access to users with deficiency or any hearing limitation, or else considering the use of said portable device for the automatic application of cosmetic products to the user in a place with loud noise, light signalling components (8) are added, such as LEDs for interface to indicate the operating status of said portable device for the automatic application of cosmetic products (1) to the user, enabling communication with the user in an efficient manner.

The portable device for the automatic application of cosmetic products (1) to the user further comprises, drive component (16), such as a user button, the function of which is to initiate the working of the system (process of capturing the image, image segmentation (for example, lip) and application of pigment).

Lastly, viewing the perfect execution of the step of image capture, camera and instant brightness generation component (7) (for example a LED Flash) also are disposed in the portable device for the automatic application of cosmetic products (1) to the user. Particularly, the objective of the camera (2) connected to a camera module port (17) present in the reduced size computer component in a single board (6) (Raspberry Pi) by means of a flat cable, is to capture the images of the users, such as the lips, which should be segmented by the computer vision model. In turn, the function of the instant brightness generation component (7) is to provide brightness so that the quality of the image captured by the camera (2) is the best possible for the computer vision model; accordingly, for example, a LED cob 12V can be used.

The portable device for the automatic application of cosmetic products (1) may comprise two power sources, a first of 5V 3A, with USB-C output to power the reduced size computer component on a single board (6) (Raspberry Pi) and a second source provides a voltage output of 12 V 5A with P4 outlet, used to power the instant brightness generation component (7) and the electronic circuit board (13) and respective movement mechanism (3) by CNC.

Particularly essential for implementing the present invention, the Computerized Numerical Command (CNC) is a system that enables the automated control of machines by means of the simultaneous movement control of various axes, through a list of movements based on sequential commands pre-programmed in G-code. The CNC is commonly used for controlling a movement of tools in various types of machinery in the industry. The system also is used a lot for the movement control in 3D printer mechanisms.

In the embodiment of the present invention, the concept of the CNC is used for the implementation of the movement control of the mechanical movement device (3) by CNC, carrying out the computerized numerical control of the three step motors (11), responsible for a linear movement in three orthogonal direction axes, called X, Y and Z, where X represents horizontal movements, Y vertical movements and Z depth movements.

Regarding the application of the cosmetic, the portable device for the automatic application of cosmetic products (1) comprises a cosmetic applicator support (18) in its mechanical movement device (3) by CNC, as can be seen in Figures 1A and 1C. In the case of applying the lipstick on a user, a lipstick pencil can be chosen. In this case, particularly, the cosmetic applicator support (18) may comprise a cylinder where the pencil lipstick is inserted jointly with a resilient element such as a spring, which is responsible for adjusting the pressure exerted by the pencil lipstick on the user, by means of the pre-load of the resilient element, as well as offsetting minor variations of the size of the pencil depending on its wear and tear. In an alternative embodiment, without straying from the scope of the present invention, the applicator support (18) may be comprised of a set of two cylinders, a first cylinder comprising the resilient element to receive the pencil lipstick, screwable onto a second cylinder of the applicator support itself.

Regarding the choice of components of its mechanical movement device (3) by CNC, the mechanical architecture chosen for use in the automatic cosmetic application, such as lipstick, is based on using step motors (11) for three-dimensional movement utilizing Computerized Numerical Command (CNC) since it is possible to obtain optimal three-dimensional movement resolution.

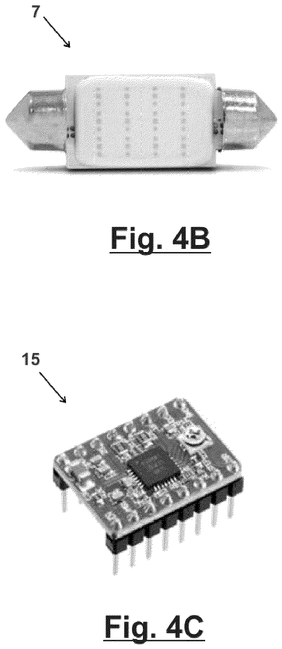

As already expounded and seen in figure 4, the axes X and Y use step motor (11A) of the type NEMA-17, one for each axis. The step angle of the step motor (11A) is 1.8°, it being necessary to take 200 steps for a full turn (360°) of the axis of the motor, which guarantees good resolution. The torque of this step motor (11A) is 4.8 Kgf.cm, sufficient for the present application. For both axes, the step motors (11A) are coupled to fuses of the type TR8 through the use of flexible couplings. Threaded to the screw of the type TR8 is a 4 start lead screw nut compatible with the specified screw, 2 screw nuts being required, one for the X-axis and one for the Y-axis.

The combination between screw and screw nut is the system responsible for the transformation of the rotary movement of the screw coupled to the step motor (11A) for the linear movement of the mechanical movement device (3) by CNC. For each full rotation of the combination step motor (11A) and screw, the screw nut linearly moves 8 mm. This relationship guarantees good precision of the linear movement of the mechanical movement device (3) by CNC, since the step motor (11A) has a step angle of 1.8°, which results in a linear movement of 0.04 mm for each step.

The Z-axis, however, utilizes the step motor (11B) of the type 28BYJ-48. For simplification, reduction in weight and sizes, the Z-axis uses a combination of pinion and rack to transform rotary into linear movement, in substitution of the combination of screw and screw nut. The resolution of this step motor (11B) is 64 steps for a full turn, that is, with each step there is a rotation of one step angle of 5.625°. For a full turn of the step motor (11B), there is a linear displacement corresponding to 45.43mm. If the step angle is 5.625°, the resulting displacement is approximately 0.71mm for each step.

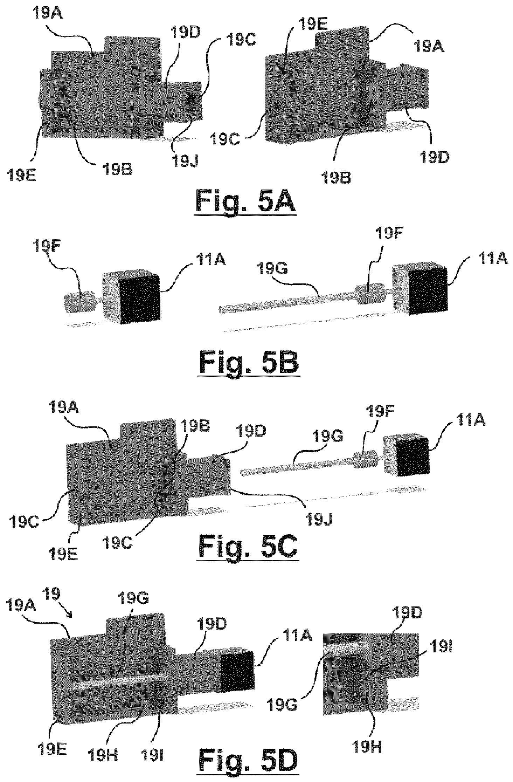

In particular, the mechanical movement device (3) by CNC is composed of an X-axis movement module, a Y-axis movement module, and a Z-axis movement module, all integrated with each other and with the electronic drive and control components of the automatic application of cosmetic product on a user according to the present invention, as can be seen in the assembly details presented in Figures 5A to 5D, 6A to 6E, 7A to 7F, 8A to 8E, and 9A to 10B.

As seen in figure 5A, the X-axis movement module (19) initially comprises an X-axis structural base (19A) with a pair of bearings (19B) axially aligned and inserted into orifices (19C) present in a first wall segment (19D) and in a second wall segment (19E). Figure 5B presents assembly details of a first step motor (11A) receives a flexible coupling (19F) with screw component (19G) of the type TR8 to its axis. In turn, figure 5C illustrates the pre-slot positioning of the combination of the step motor (11A), flexible coupling (19F) with screw component (19G) relative to the X-axis structural base (19A). Lastly, as seen in figure 5D, the assembly of the X-axis movement module (19) is finalized with the insertion of an end of stroke sensor (19H) positioned on an inner face (19I) of the first wall segment (19D), transposition of the flexible coupling (19F) with screw component (19G) through the orifice (19C) of the first wall segment (19D), transposition of the screw component (19G) through the bearing (19B) of the second wall segment (19E), and positioning of the step motor (11A) on the outer face (19J) of the first wall segment (19D).

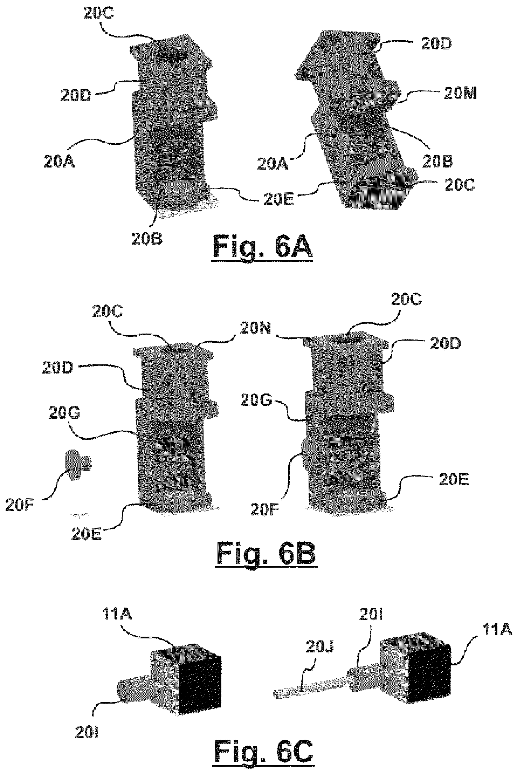

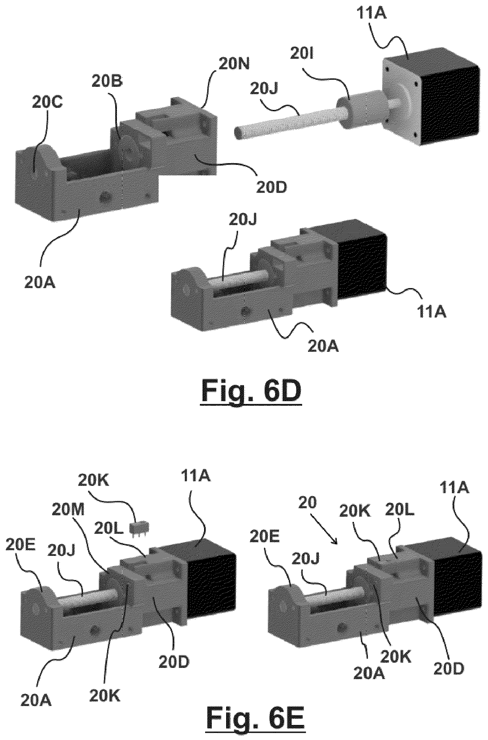

As seen in figure 6A, the Y-axis movement module (20) initially comprises a Y-axis structural base (20A) with a pair of bearings (20B) axially aligned and inserted into orifices (20C) present in a first wall segment (20D) and in a second wall segment (20E). The Y-axis structural base (20A) further comprises a screw nut (20F) and is inserted into an orifice (20G) of one side face (20H) having a perpendicular axis relative to the axis of alignment between orifices (20C), as seen in figure 6B. Figure 6C presents assembly details of a second step motor (11A) receives a flexible coupling (20I) with screw component (20J) of the type TR8 to its axis. In turn, figure 6D illustrates the pre-slot positioning and slot of the combination of the step motor (11A), flexible coupling (20I) with screw component (20J) relative to the Y-axis structural base (20A). Lastly, as seen in figure 6E, the assembly of the Y-axis movement module (20) is finalized with the insertion of an end of stroke sensor (20K) positioned on a top outer face (20L) of the first wall segment (20D), insertion of an end of stroke sensor (20K) positioned on an inner face (20M) of the first wall segment (20D), transposition of the flexible coupling (20I) with screw component (20J) through the orifice (20C) of the first wall segment (20D), transposition of the screw component (20J) through the bearing (20B) of the second wall segment (20E), and positioning of the step motor (11A) on the outer face (20N) of the first wall segment (20D).

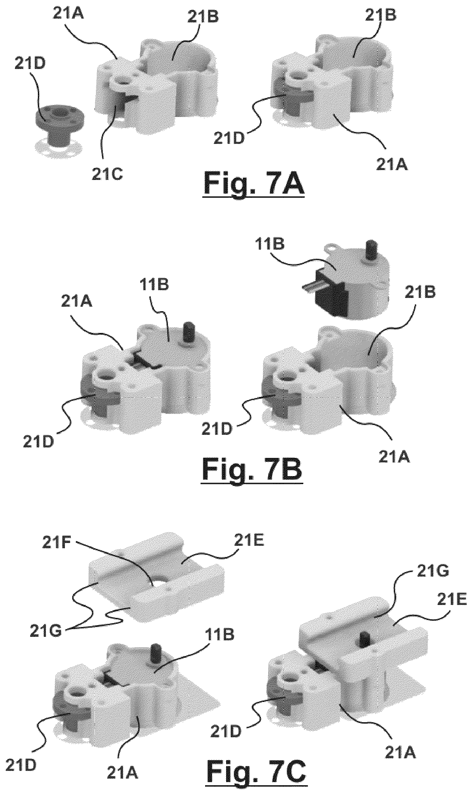

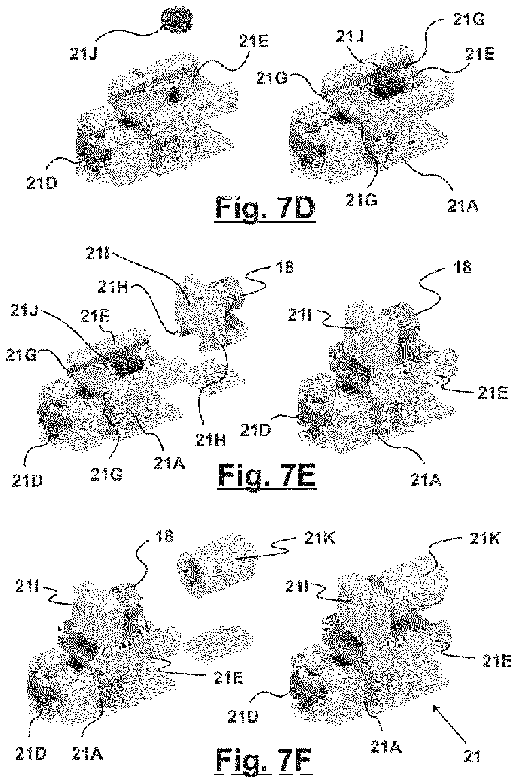

As seen in figure 7A, the Z-axis movement module (21) initially comprises a Z-axis structural base (21A) comprising a first reception accommodation (21B) of step motor (11B), type 28BYJ-48, and a second reception accommodation (21C) of screw nut (21D). Figure 7B presents details of the positioning of the step motor (11B) in the first accommodation (21B) of the Z-axis structural base (21A). In particular, as seen in Figures 7C to 7E, a guide component (21E) is positioned on the first accommodation (21B) and respective step motor (11B), comprising a passage orifice (21F) of the axis of said step motor (11B), and female guide recesses (21G) receiving male guide bulges (21H) from a base component (21I) of a cosmetic applicator support (18), and a gear (21J) is positioned on the axis of said step motor (11B), between said guide component (21E) and the base component (21I), particularly, said gear (21J) is fitted into a rack of said base component (21I) of said cosmetic applicator support (18). Alternatively, an additional fastening lid (21K) may be screwed onto said cosmetic applicator support (18), as presented in figure 7F.

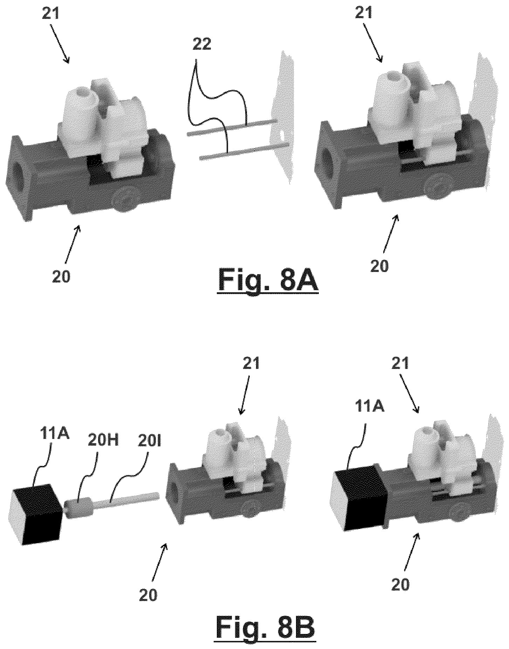

The integration assembly between X-axis movement module (19), Y-axis movement module (20), and a Z-axis movement module (21) in the mechanical movement device (3) by CNC is presented in Figures 8A to 8E.

As seen in figure 8A, two smooth sliding bars (22) of the Z-axis movement module are inserted into the Y-axis movement module (20), crossing said Z-axis movement module (21), whereby enabling a back-and-forth movement of this said Z-axis movement module (21).

Figure 8B shows the positioning of the combination slot of the step motor (11A), flexible coupling (20H) with screw component (20I) relative to the Y-axis structural base (20A) as already addressed, however, with the presence of the Z-axis movement module (21) slidably positioned on smooth bars (22) that cross said Y-axis movement module (20).

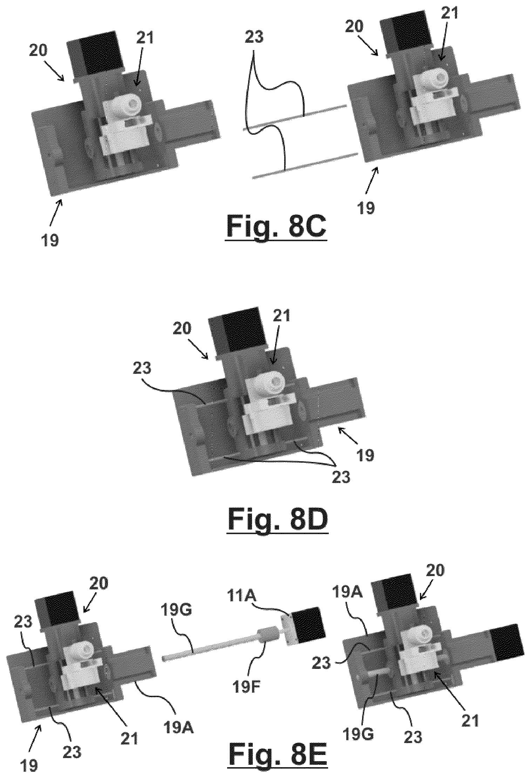

As seen in figures 8C and 8D, two smooth sliding bars (23) of the Y-axis movement module (20) and, consequently, of the Z-axis movement module (21), are inserted into the X-axis movement module (19), crossing said Y-axis movement module (20), whereby enabling a back-and-forth movement of this said Y-axis movement module (20) as in the Z-axis movement module (21).

Figure 8E shows the positioning of the combination slot of the step motor (11A), flexible coupling (19F) with screw component (19G) relative to the X-axis structural base (19A) as already addressed, however, with the presence of the Y-axis movement module (20) with Z-axis movement module (21) slidably positioned on the smooth bars (23) which cross said X-axis movement module (19).

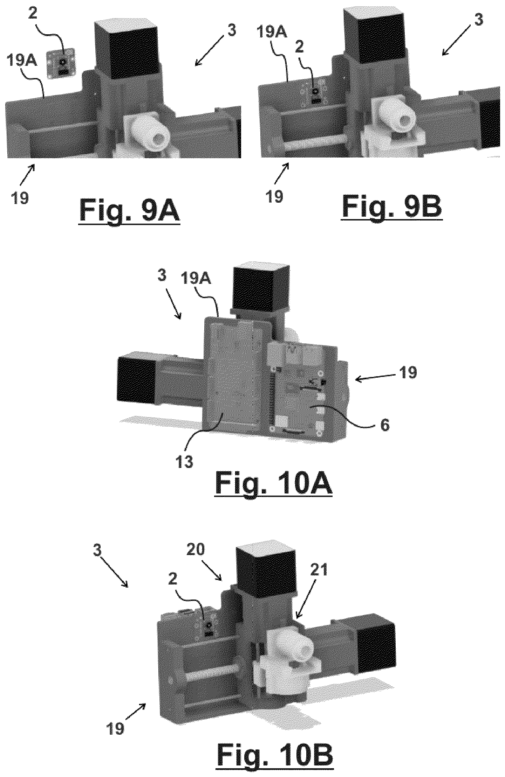

The movement mechanism (3) by CNC comprises the camera (2) which is positioned on an inner face of the X-axis structural base (19A) of the X-axis movement module (19), as illustrated in Figures 9A and 9B.

Lastly, regarding the assembly of the movement mechanism (3) by CNC according to the present invention, the electronic circuit board component (13), for example Shield RAMPS, in the hardware electronic platform (10), for example Arduino Mega, and the reduced size computer component on a single board (6), such as a Raspberry Pi board, are positioned on an outer face of the X-axis structural base (19A) of the X-axis movement module (19), as illustrated in figure 10A, resulting in the full combination of the movement mechanism (3) by CNC, as presented in figure 10B.

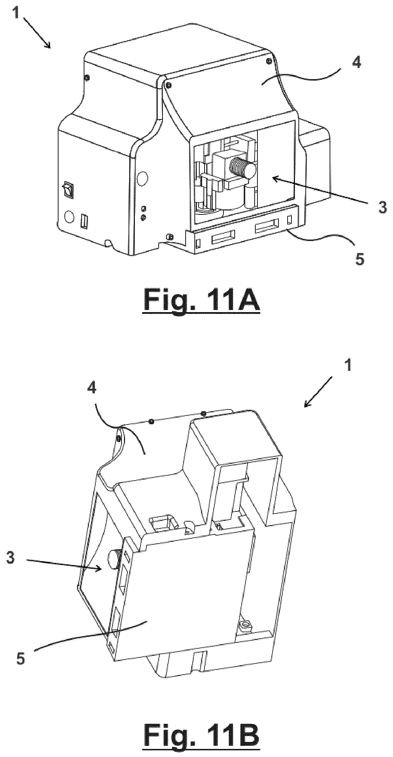

Besides the movement mechanism (3) by CNC, the portable device for the automatic application of cosmetic products (1) comprises, in a non-restrictive manner, in an essential embodiment of the invention and as seen in Figures 11A and 11B, a casing (4) and a base support (5) receiving and encapsulating said movement mechanism (3). Nevertheless, other embodiments with auxiliary support components are made possible by the present invention.

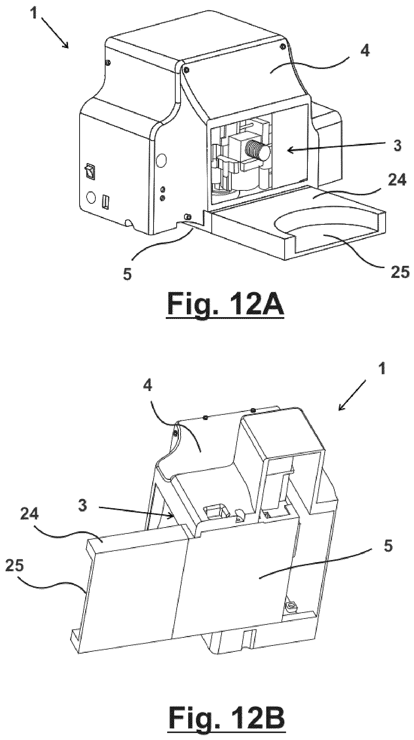

In an alternative embodiment of the present invention, the portable device for the automatic application of cosmetic products (1), viewing greater stability in the image capture and application of the cosmetic product on the user, prevented undesirable movements of the head of the user, is constituted of a user head support component (24), as seen in Figures 12A and 12B, which is fastened to one end of the base support (5). Said user head support component (24) may also comprise a recess (25) for accommodating the chin of the user providing greater support to the user's head.

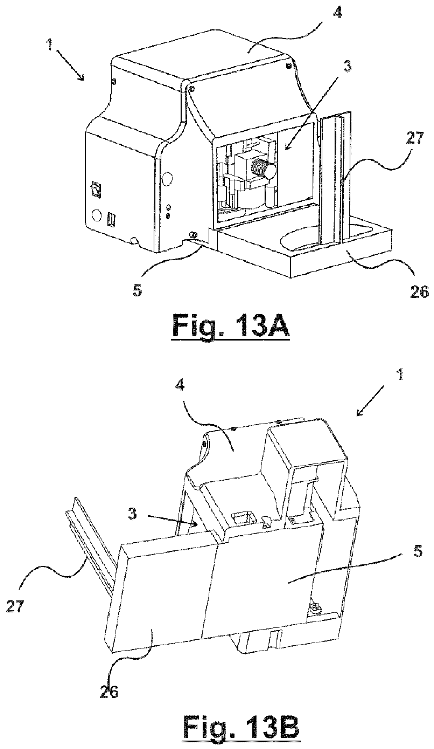

Further, in another alternative embodiment of the present invention, the portable device for the automatic application of cosmetic products (1) may be directed, for example, to the use of tests or to demonstrate the automatic application of cosmetics. In this case, the use of a mannequin head may be necessary and accordingly, said portable device for the automatic application of cosmetic products (1) may comprise a mannequin head support component (26), as seen in Figures 13A and 13B, which is fastened at one end of the base support (5). In turn, the mannequin head support component (26) may also comprise a vertical structure (27) that helps in the fastening of the mannequin's head.

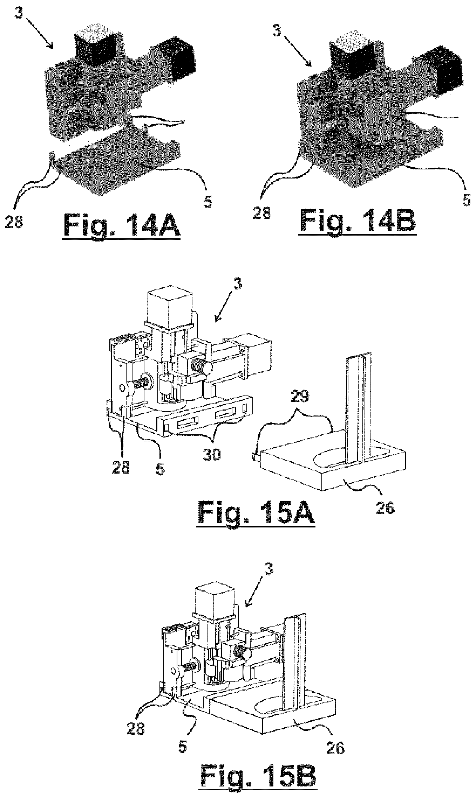

Concerning the fastening of the movement mechanism (3) by CNC to the base support (5), this may be carried out by means of locks (28) present in said base support, as seen in Figures 14A and 14B.

In turn, concerning the fastening of the base support (5) to the user head support component (24) or to the mannequin head support component (26) (this embodiment exemplified in Figures 15A and 15B), said fastening occurs by means of encasements between fins (29) of the support component (24 or 26) and orifices (30) of the base support (5), or another type of fastening.

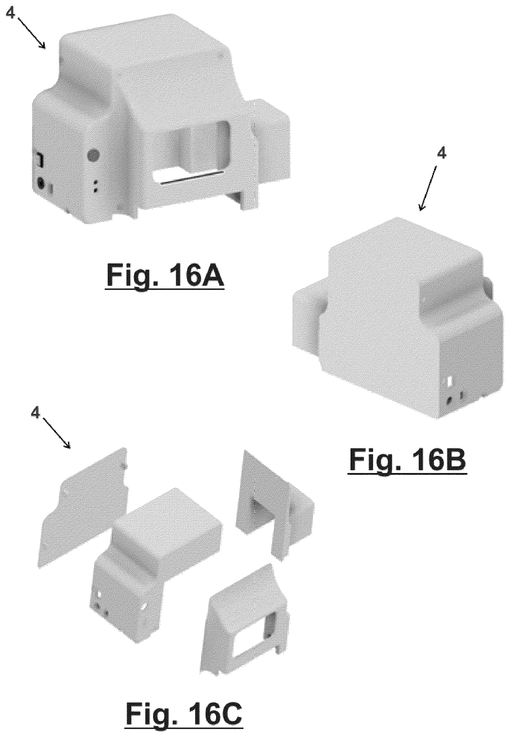

Lastly, with regards to the casing (4), it may be constituted by one or more parts (in this case fastenable by slot or by screws), as seen in Figures 16A to 16C, being fastened, by means of slot or other means of fastening, to the base support (5) receiving, encapsulating the movement mechanism (3) by CNC, thus making up the portable device for the automatic application of cosmetic products (1) according to the present invention.

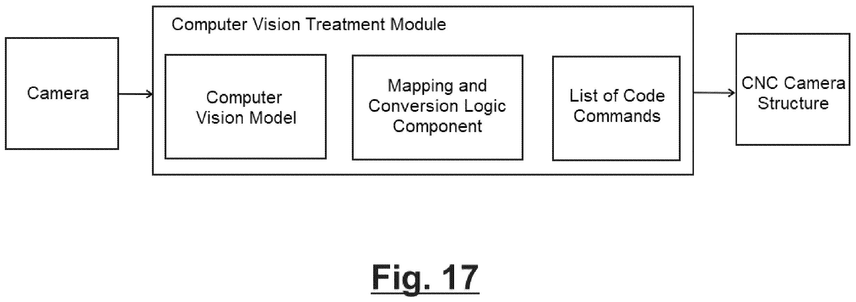

Accordingly, in light of all the foregoing, the present invention is based on the control of a CNC structure by means of the output generated from a computer vision model that performs the segmentation process of a region, such as a lip, from the capture of an image. Generally speaking, the structure of the solution involving the use of the computer vision model is presented in the simplified diagram of figure 17. In particular, the initial point of the system refers to the camera (2), which will be responsible for capturing the image which will be supplied as input for the computer vision model present in a computer vision treatment module. The computer vision model, in turn, will be responsible for segmenting the lips and furnishing this information to a logical realization component of spatial mapping logics of the image and the conversion and generation of a list of commands of the Code G type to control the movement mechanism (3) by CNC. By means of the present invention, integration is made possible between the computer vision components and the movement mechanism (3) by CNC, whereby enabling the end-to-end working, from image capturing, image segmentation such as the lip, mapping and conversion of the region to be applied the material cosmetic and, lastly, a movement of the movement mechanism (3) for pigmentation of the region such as the lip.

Concerning the treatment of the computer vision, the present invention also provides a post-processing approach of the segmentation of an image of the lips of a person, with the aim of passing on this information to the movement process of automatic application of a cosmetic product on a user.

By way of a lip image segmentation model (MaskR-CNN) with a post-processing approach of the lip segmentation, it is possible to detect and segment the lips of a person with the aim of passing on this information to the application process of a cosmetic product by the movement mechanism (3) by CNC.

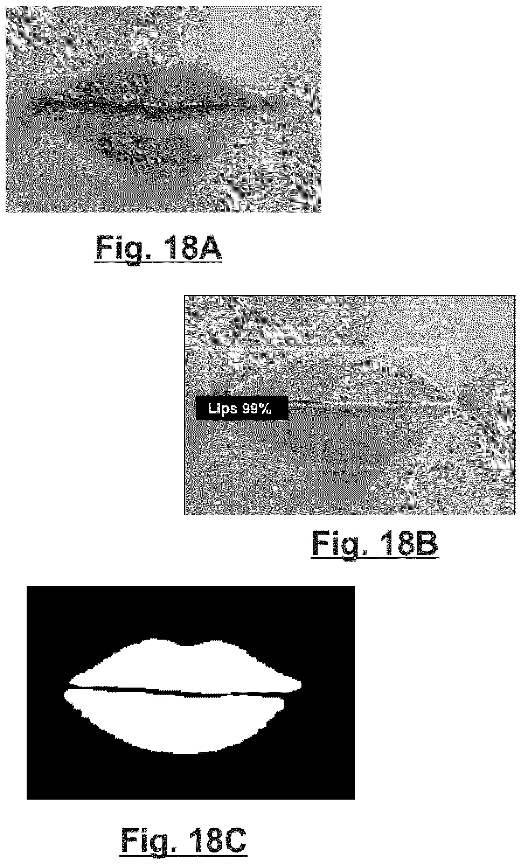

The process of segmenting the lip image is presented visually through images set out in Figures 18A to 18H.

Figure 18A presents an image of lips, in a first step of treatment of the computer vision, wherein the computer vision model is trained to detect and segment the image of the lips.

In contrast, Figure 18B presents an image of the lips with result of the lip segmentation step through the method of MaskR-CNN segmentation, which demonstrates the result of the inference of a deep learning architectural model applied in said MaskR-CNN segmentation method for lip detection and segmentation. As presented in this image of the figure 18B, the segmentations are made in two classes, top lip and bottom lip, consecutively. This step of computer vision treatment also considers a ceiling of at least 90% accuracy for each class because below this value, important information on the lips is lost, such as Cupid's bow.

After the lip segmentation steps, a binary image with values of 0 and 1 is generated, wherein the value 0 represents the background, and all the information that does not refer to the lips, and the value 1 contains the information on the lips. One example of this result of the lip segmentation through the MaskR-CNN segmentation method is presented in the image of figure 18C.

Given that the device and method of automatically applying a cosmetic product on a user according to the present invention consists of integration between computer vision, hardware components and movement mechanism by CNC, there is a need to apply computer vision filters, by means of post-processing steps, to improve the application of the lipstick, as detailed ahead.

The post-processing steps are performed to remover possible serrations from the lip segmentation steps and bring a smoother shape. Having a more complex shape, the image segment of the top lip is harder to process, requiring more image transformations. In turn, the image segment of the bottom lip is easier to be treated, so the processing is also simplified.

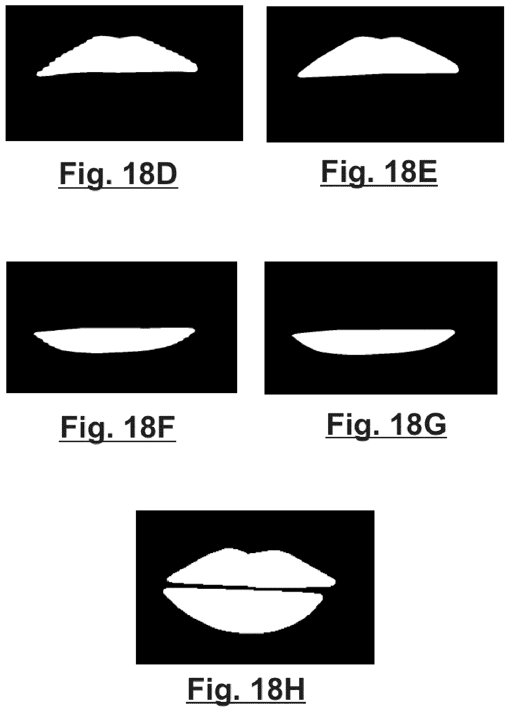

The post-processing of the image segment of the top lip is carried out in accordance with the following steps: firstly, the points are established on the horizontal axis where the image segmentation begins and ends, then the location of the high-relief points of Cupid's bow are calculated and determined. The position de each relief of Cupid's bow of the image segment of the top lip is then used as a base for determining the location of the point of greatest descent, from this point the image segmentation of the top lip is split into two parts on the vertical axis, and the reason for using Cupid's bow as a metric is because this relief undesirably ends up being filled in. Each one of the parts of the image segment of the top lip is processed separately utilizing a convex casing to generate a smoother contour which is filled in using polygons. The choice of using polygons is due to the fact that the convex casing generates major polygonal contour in and of itself, so using polygons to fill out the full shape is not problematic. Lastly, the two parts of the image segment of the top lip are joined to form and generate the expected image result. Figures 18D and 18E present, respectively, images of the segmentations of the top lip with and without the application of the post-processing steps.

Further, the post-processing steps of the image segment of the bottom lip occur in a manner similar to that of the image segment of the top lip, but in a simplified way, there being no need to separate into any of the axes, as this part of the image of the bottom lip does not present relief of major complexity, so the post-processing is performed in a complete segmentation. In a first step, a dilation of the image of the bottom lip is carried out in order to fill in potential defects that might affect the following steps. Next, similar to the post-processing of the image segment of the top lip described previously, a convex casing is generated to soften the contours and tidy up potential faults and gaps, the filling out being executed using polygons, and an erosion applied to return to the size before the dilation and generate the final expected image result. Figures 18F and 18G present, respectively, images of the segmentations of the bottom lip with and without the application of the post-processing steps.

Lastly, having finalized the post-processing steps of the image segments of the top lip and of the bottom lip, the removal of possible serrations from the lip image segmentation steps is perceivable, as seen in figure 18H which presents an image of the result of the lip segmentation through the application of the post-processing steps in addition to the MaskR-CNN segmentation method.

Therefore, with the improved image treatment technique such as described above, crucial for a device and method of automatically applying a cosmetic product on a user, the synergistic technical effect of integration becomes possible between computer vision, hardware components and movement mechanism by CNC, since it is permitted that the computer vision model of image segmentation may supply improved information to carry out spatial mapping logics of the image and the conversion and generation of a Code G file for describing a path and CNC drive. Consequently, perfect movement is enabled of the movement mechanism by CNC according to the present invention.

## Claims

1. A device for automatically applying a cosmetic product on a user, **characterized by** being composed of a portable device for the automatic application of cosmetic products (1) comprising a casing (4) and a base support (5) for receiving and encapsulating a movement mechanism (3) by Computerized Numerical Command - CNC through a list of movements based on pre-programmed sequential commands in G-code, wherein said movement mechanism (3) by CNC comprises:
- a reduced size computer component on a single board (6), such as a Raspberry Pi 4 board, for sending electric drive signals to a component to generate instant brightness (7), for light signalling components (8) and for a buzzer (9); of image capture processing, accessing the programming interface of the cloud, and for sending movement commands for a hardware electronic platform (10), such as an Arduino MEGA board;
- hardware electronic platform (10) to control the sensors and actuators that are related to the drive of the CNC and step motors (11) of the mechanical movement device (3) for three axes (X, Y and Z) in accordance with the end of stroke switches (12);
- an electronic circuit board (13), such as Shield RAMPS, with auxiliary connections for performing electronic connection interfaces between the hardware electronic platform (10) and the electronic components contained in the mechanical movement device (3) by CNC, such as actuation drivers, step motors (11) and end of stroke switches (12);
- a driver (15), such as A4988, for electronic interface between the electronic circuit board (13) and the step motors (11) used for movement of the mechanical movement device (3) by CNC, and of conditioning the electric signals originating of the hardware electronic platform (10) so that they can be used to control the movement of the step motors (11);
- step motors (11) of movement of the mechanical movement device (3) by CNC along three axes of freedom X, Y and Z, such as two step motors (11A) of the type NEMA-17 of movement, each one on an X-axis and Y, and a step motor (11B) of the type 28BYJ-48 of movement on the Z axis;
- end of stroke switches (12) positioned at the origin of the Cartesian axes X, Y and Z of said mechanical movement device (3) by CNC;
- buzzer (9) for sound indication to the user of the operating status of said portable device for the automatic application of cosmetic products (1);
- light signaling components (8), such as LEDs, of interface for indicating the operating status of said portable device for the automatic application of cosmetic products (1) to the user;
- drive component (16), such as a user button, to initialize image capture processing, image segmentation, such as lip, and application of pigment;
- a generation component of instant brightness (7), such as a LED Flash;
- a user image capture camera (2), to be provided as entry to a computer vision model, such as a lip, coupled to the reduced size computer component on a single board (6) and to the movement mechanism (3) by CNC; and
- a computer vision treatment module comprising the computer vision model for segmenting the image, and a component to carry out the spatial mapping logics of the image and the conversion and generation of a G-Code file for describing the path and CNC drive for controlling said movement mechanism (3).

2. The device for automatically applying a cosmetic product on a user, according to claim 1, **characterized in that** the movement mechanism (3) by CNC comprises:
- an X-axis movement module (19) comprising an X-axis structural base (19A) with a pair of bearings (19B) axially aligned and inserted into orifices (19C) present in a first wall segment (19D) and in a second wall segment (19E); a first step motor (11A) receiving a flexible coupling (19F) with screw component (19G) of the type TR8 to its axis; end of stroke sensor (19H) positioned on an inner face (19I) of the first wall segment (19D); transposition of the flexible coupling (19F) with screw component (19G) through the orifice (19C) of the first wall segment (19D); transposition of the screw component (19G) through the bearing (19B) of the second wall segment (19E), and positioning of the step motor (11A) on the outer face (19J) of the first wall segment (19D);
- a Y-axis movement module (20) comprising a Y-axis structural base (20A) with a pair of bearings (20B) axially aligned and inserted into orifices (20C) present in a first wall segment (20D) and in a second wall segment (20E); the screw nut (20F) inserted into an orifice (20G) of a side face (20H) of the Y-axis structural base (20A) having a perpendicular axis relative to the alignment axis between orifices (20C); a second step motor (11A) receiving a flexible coupling (20I) with screw component (20J) of the type TR8 to its axis; an end of stroke sensor (20K) positioned on a top outer face (20L) of the first wall segment (20D); an end of stroke sensor (20K) positioned on an inner face (20M) of the first wall segment (20D); transposition of the flexible coupling (20I) with screw component (20J) through the orifice (20C) of the first wall segment (20D); transposition of the screw component (20J) through the bearing (20B) of the second wall segment (20E); and positioning of the step motor (11A) on the outer face (20N) of the first wall segment (20D);
- a Z-axis movement module (21) comprising a Z-axis structural base (21A) comprising a first reception accommodation (21B) of a step motor (11B), type 28BYJ-48, and a second reception accommodation (21C) of a screw nut (21D); a guide component (21E) positioned on the first accommodation (21B) and respective step motor (11B), comprising a passage orifice (21F) of the axis of said step motor (11B), with female guide recesses (21G) receiving male guide bulges (21H) from a base component (21I) of a cosmetic applicator support (18); a gear (21J) positioned on the axis of said step motor (11B), between said guide component (21E) and the base component (211), said gear (21J) being fitted into a rack of said base component (21I) of said cosmetic applicator support (18);
- X-axis movement module (19), Y-axis movement module (20), and Z-axis movement module (21) integrated by two smooth sliding bars (22) of the Z-axis movement module (21) inserted into the Y-axis movement module (20), crossing said Z-axis movement module (21);
- slot of the combination of the step motor (11A), flexible coupling (20H) with screw component (20I) relative to the Y-axis structural base (20A) with the presence of the Z-axis movement module (21) slidably positioned on the smooth bars (22) that cross said Y-axis movement module (20);
- at least two smooth sliding bars (23) of the Y-axis movement module (20) and, consequently, of the Z-axis movement module (21), inserted into the X-axis movement module (19), crossing said Y-axis movement module (20); and
- slot of the combination of the step motor (11A), flexible coupling (19F) with screw component (19G) relative to the X-axis structural base (19A) with the presence of the Y-axis movement module (20) with Z-axis movement module (21) slidably positioned on the smooth bars (23) crossing said X-axis movement module (19).

3. The device for automatically applying a cosmetic product on a user, according to claim 2, **characterized by** comprising an additional fastening lid (21K) threaded to said cosmetic applicator support (18).

4. The device for automatically applying a cosmetic product on a user, according to claim 2, **characterized in that** the movement mechanism (3) by CNC comprises the camera (2) positioned on an inner face of the X-axis structural base (19A) of the X-axis movement module (19).

5. The device for automatically applying a cosmetic product on a user, according to claim 2, **characterized in that** the electronic circuit board component (13), the hardware electronic platform (10), and the reduced size computer component on a single board (6), are positioned on an outer face of the X-axis structural base (19A) of the X-axis movement module (19).

6. The device for automatically applying a cosmetic product on a user, according to claim 1, **characterized in that** the fastening of the movement mechanism (3) by CNC to the base support (5) is carried out by means of locks (28) present in said base support.

7. The device for automatically applying a cosmetic product on a user, according to claim 1, **characterized in that** said portable device for the automatic application of cosmetic products (1) comprises a user head support component (24), fastened on one end of the base support (5).

8. The device for automatically applying a cosmetic product on a user, according to claim 7, **characterized in that** said user head support component (24) comprises a recess (25) to accommodate the chin of the user.

9. The device for automatically applying a cosmetic product on a user, according to claim 1, **characterized in that** said portable device for the automatic application of cosmetic products (1) comprises a mannequin head support component (26), which is fastened at one end of the base support (5), wherein said mannequin head support component (26) comprises a vertical structure (27) of fastening the mannequin head.

10. The device for automatically applying a cosmetic product on a user, according to claim 7 or 9, **characterized in that** the fastening of the base support (5) to the user head support component (24) or to the mannequin head support component (26) is by means of encasements between fins (29) of the support component (24 or 26) and orifices (30) of the base support (5).

11. A method of automatically applying cosmetic product on user, **characterized by** comprising the steps of:
- moving a movement mechanism (3) by means of Computerized Numerical Command - CNC along three axes of freedom X, Y and Z through a list of movements based on pre-programmed sequential commands in G-code;
- by means of reduced size computer component on a single board (6), such as a Raspberry Pi 4 board, sending electric drive signals to a component generating instant brightness (7), to light signalling components (8) and to a buzzer (9), image capture processing, accessing the programming interface of the cloud, and sending movement commands to a hardware electronic platform (10), such as an Arduino MEGA board;
- controlling the sensors and actuators that are related to the drive of the CNC and mechanical movement device (3), by means of a hardware electronic platform (10), such as an Arduino MEGA board, meaning the step motors (11) are driven to three X, Y and Z axes in accordance with the end of stroke switches (12);
- by means of an electronic circuit board (13), for example Shield RAMPS, create the electronic interfaces necessary for connection between the hardware electronic platform (10) and the electronic components contained in the mechanical movement device (3) by CNC, such as actuation drivers, step motors (11) and end of stroke switches (12);
- create, by means of a driver (15), the electronic interface between the electronic circuit board (13), for example Shield RAMPS, and the step motors (11) used for movement of the mechanical movement device (3) by CNC and condition the electric signals originating from the hardware electronic platform (10), so that they can be used to control the movement of the step motors (11);
- provide a positioning reference for the mechanical movement device (3) by CNC, by means of end of stroke switches (12), each one positioned at the origin of the Cartesian axes X, Y and Z of said mechanical movement device (3) by CNC;
- create the sound indication of operating status of said portable device for the automatic application of cosmetic products (1) to the user by means of a buzzer (9);
- create the light indication of operating status of said portable device for the automatic application of cosmetic products (1) to the user by means of light signalling components (8), such as LEDs;
- initiate the working of the image capture process, image segmentation and application of pigment; by means of the drive component (16), such as a user button;
- generate brightness by means of an instant brightness generation component (7), such as a LED Flash;
- create the user image capture, such as a lip, by means of a camera (2) coupled to the reduced size computer component on a single board (6) and to the movement mechanism (3) by CNC, and provide said user image for a computer vision model; and
- create, in a computer vision treatment module, the image segmentation, by means of the computer vision model and supply this information to a component to create the spatial mapping logics of the image and the conversion and generation of a G-Code file for describing a CNC path and drive for controlling said movement mechanism (3).

12. The method of automatically applying cosmetic product on user, according to claim 11, **characterized in that** the act of segmentation by means of the computer vision model comprises the following steps:
- detecting the image of the lips and applying the inference of a deep learning architecture model (Deep Learning) in a method of MaskR-CNN segmentation for lip segmentation, wherein the segmentations are made in a first class of top lip and a second class of bottom lip, consecutively, considering in this computer vision treatment step, a ceiling of, at least, 90% in precision for each class; and generating a binary image with values of 0 and 1, wherein the value 0 represents all the information that does not refer to lips, and the value 1 contains the information on the lips; and
- implement a post-processing of the image segment of the top lip determining which points on the horizontal axis the image segmentation starts and ends, and then calculate and determine where the relief points of the Cupid's bow are; use the position of each relief of Cupid's bow of the image segment of the lip as a base for determining where the point of greatest descent is located, and from this point, divide the image segmentation of the top lip into two parts on the vertical axis; implement the processing separate of each one of the two parts of the image segment of the top lip utilizing a convex casing to soften the contour which is filled utilizing polygons; implement the juncture of the two parts of the image segment of the top lip; and generate the final image of the top lip; and
- implement a post-processing of the image segment of the bottom lip creating a dilation of the image of the bottom lip to fill in possible defects; generate a convex casing to soften the contour arranging faults and gaps, the filling being implemented utilizing polygons; create an erosion to return to the size before the dilation of the image of the bottom lip; and generating the final image of the bottom lip.
